# EUROPEAN PATENT APPLICATION

(11) **EP 3 364 409 A1**
(43) Date of publication of application: **22.08.2018**
(21) Application number: 16855519.1
(22) Date of filing: 14.10.2016
(51) Int. Cl.: G10L 15/22, G06F 3/16, G06F 17/30, G10L 15/00, G10L 15/10, G10L 19/018

(54) **INFORMATION MANAGEMENT SYSTEM AND INFORMATION MANAGEMENT METHOD**

(30) Priority: 15.10.2015 JP 2015203863
(71) Applicant: Yamaha Corporation, Hamamatsu-shi, Shizuoka 430-8650 (JP)
(72) Inventor: IWATA, Takahiro, Hamamatsu-shi Shizuoka 430-8650 (JP); SETO, Yuki, Hamamatsu-shi Shizuoka 430-8650 (JP); OCHI, Yumiko, Hamamatsu-shi Shizuoka 430-8650 (JP); ISHIDA, Tetsuro, Hamamatsu-shi Shizuoka 430-8650 (JP); MORIGUCHI, Shota, Hamamatsu-shi Shizuoka 430-8650 (JP); IWASE, Hiroyuki, Hamamatsu-shi Shizuoka 430-8650 (JP)
(74) Representative: Hoffmann Eitle
(86) International application number: PCT/JP2016/080523
(87) International publication number: WO 2017/065266

(57) **Abstract**

An information management system is a system for generating distribution information for indicating to a terminal device related information related to a guidance voice for presentation of the related information to a user by the terminal device, the system including: a text identifier configured to identify from among multiple different registered texts a registered text that is similar to an input text representative of the guidance voice; and an information generator configured to generate distribution information that indicates to the terminal device the related information corresponding to a modified text that is partially different from the registered text identified by the text identifier.

## Description

### TECHNICAL FIELD

The present invention relates to a technique for managing information provided for users.

### BACKGROUND ART

Conventionally, there has been proposed a technique for providing users with a variety of information in accordance with results of speech recognition of a spoken voice. In Patent Document 1, for example, there is disclosed a configuration in which speech recognition is carried out on a spoken voice of a user, and an area or a scale or the like is specified of a map displayed around a target position identified as a result of the speech recognition.

### RELATED ART DOCUMENT

### Patent Document

Patent Document 1: JP-A-03-175478

### SUMMARY OF THE INVENTION

### Problem to be Solved by the Invention

It would be convenient for a hearing-impaired person who has difficulty hearing a guidance voice, or for a foreigner who does not understand the language of the guidance voice, if speech recognition could be performed on a guidance voice broadcast on a public transportation service such as a train or a bus, so that guidance information in the form of text, or in the form of translated text could be provided to a terminal device of a passenger. In reality, however, it is difficult to realize flawless speech recognition. Errors in recognition may occur as a result of, for example, pronunciation traits (habits) unique to individual speakers, or as a result of background noise or the like during voice receipt. When a recognition error occurs, there is a possibility that appropriate related information corresponding to the guidance voice may not be provided to users. In the foregoing, while reference is made to speech recognition of a guidance voice, similar problems may occur, for example, in a case where a person acting as a guide inputs a text represented by guidance voice. For example, in a case where a text entered by a guide person or a translation text thereof is presented as related information, there is a possibility that appropriate related information corresponding to the guidance voice may not be provided to users due to input error made by the guide person or for other reasons. In view of the foregoing, it is an object of the present invention to provide to users appropriate related information corresponding to a guidance voice.

### Means of Solving the Problems

To solve the above-mentioned problems, an information management system according to a preferred aspect of the present invention is an information management system for generating distribution information for indicating to a terminal device related information related to a guidance voice for presentation of the related information to a user by the terminal device, and includes: a text identifier configured to identify from among multiple different registered texts a registered text that is similar to an input text representative of the guidance voice; and an information generator configured to generate distribution information that indicates to the terminal device the related information corresponding to a modified text that is partially different from the registered text identified by the text identifier. An information management system according to another aspect of the present invention is an information management system for generating distribution information for indicating to a terminal device related information related to a guidance voice for presentation of the related information to a user by the terminal device, and includes: a text identifier configured to identify from among multiple different registered texts a registered text that is similar to an input text representative of the guidance voice; and an information generator configured to generate distribution information that indicates to the terminal device the registered text identified by the text identifier, each of the registered texts including an insertion section for insertion of a selected one of multiple insertion phrases, with the text identifier being configured to execute a first process of identifying from among the multiple registered texts a registered text that is similar to the input text, and a second process of searching among the multiple insertion phrases for an insertion phrase corresponding to the input text, and the information generator being configured to, in a case where an insertion phrase corresponding to the input text is identified at the second process, generate distribution information that indicates the related information corresponding to a text obtained by inserting the insertion phrase identified at the second process into the insertion section of the registered text identified at the first process, whereas to generate distribution information that indicates the related information corresponding to a text corresponding to the registered text from which the insertion section has been removed in a case where an insertion phrase corresponding to the input text is not identified at the second process. An information management system according to another aspect of the present invention is an information management system for generating related information related to a guidance voice, and includes: a text identifier configured to identify from among multiple different registered texts a registered text that is similar to an input text representative of the guidance voice; and an information generator configured to generate the related information corresponding to a modified text that is partially different from the registered text identified by the text identifier.

To solve the above-mentioned problems, an information management method according to a preferred aspect of the present invention is an information management method for generating distribution information for indicating to a terminal device related information related to a guidance voice for presentation of the related information to a user by the terminal device, and includes: identifying from among multiple different registered texts a registered text that is similar to an input text representative of the guidance voice; and generating distribution information that indicates to the terminal device the related information corresponding to a modified text that is partially different from the registered text identified by the text identifier. An information management method according to another aspect of the present invention is an information management method for generating distribution information for indicating to a terminal device related information related to a guidance voice for presentation of the related information to a user by the terminal device, and includes: identifying from among multiple different registered texts a registered text that is similar to an input text representative of the guidance voice; and generating the distribution information that indicates to the terminal device the registered text identified by the text identifier, each of the registered texts including an insertion section for insertion of a selected one of multiple insertion phrases. The identifying of a registered text includes executing a first process of identifying from among the multiple registered texts a registered text that is similar to the input text, and a second process of searching among the multiple insertion phrases for an insertion phrase corresponding to the input text, and the generating of the distribution information includes, in a case where an insertion phrase corresponding to the input text is identified at the second process, generating distribution information that indicates the related information corresponding to a text obtained by inserting the insertion phrase identified at the second process into the insertion section of the registered text identified at the first process, whereas generating distribution information that indicates the related information corresponding to a text corresponding to the registered text from which the insertion section has been removed in a case where an insertion phrase corresponding to the input text is not identified at the second process. An information management method according to another aspect of the present invention is an information management method for generating related information related to a guidance voice, and includes: identifying from among multiple different registered texts a registered text that is similar to an input text representative of the guidance voice; and generating the related information corresponding to a modified text that is partially different from the identified registered text.

### BRIEF DESCRIPTION OF THE DRAWINGS

Fig. 1 is a block diagram of an information management system according to a first embodiment of the present invention;
Fig. 2 is a block diagram of a voice guidance system and a management apparatus;
Fig. 3 is a schematic diagram of a guidance table;
Fig. 4 is a flowchart of operation of a text identifier and an information generator;
Fig. 5 is a block diagram of a terminal device;
Fig. 6 is a flowchart of the overall operation of the information management system;
Fig. 7 is a schematic diagram of a guidance table in a second embodiment;
Fig. 8 is a flowchart of operation of a text identifier and an information generator in the second embodiment;
Fig. 9 is a schematic diagram of a guidance table in a third embodiment; and
Fig. 10 is a flowchart of operation of a text identifier and an information generator in the third embodiment.

### MODES FOR CARRYING OUT THE INVENTION

### FIRST EMBODIMENT

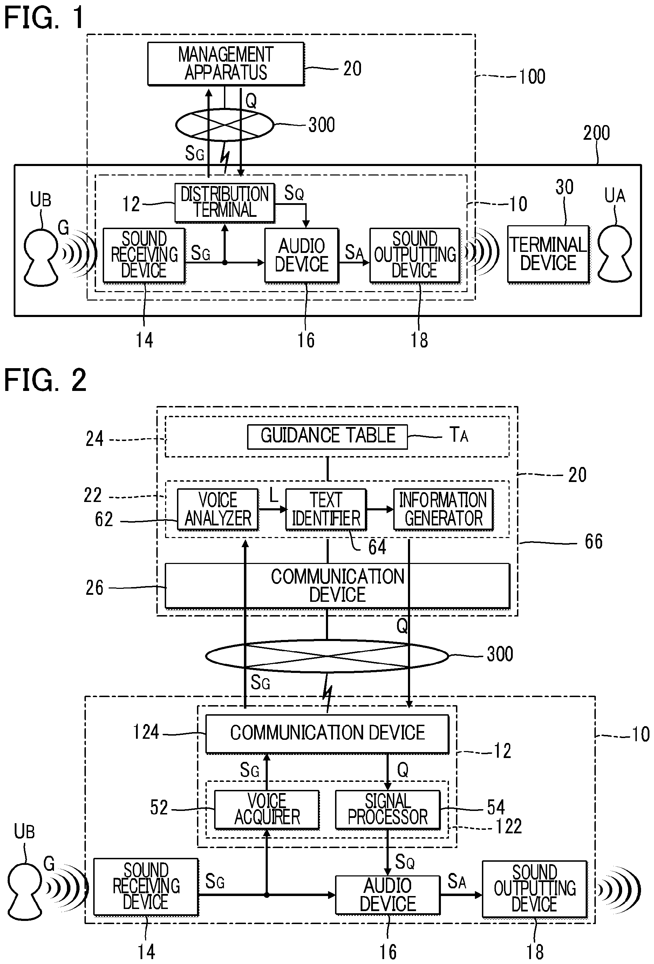

Fig. 1 is a block diagram of an information management system 100 of a first embodiment. The information management system 100 of the first embodiment is a computer system for providing information to a user U_{A} of a transportation facility, such as a train or a bus, and includes a voice guidance system 10 and a management apparatus 20. The voice guidance system 10 is provided in a vehicle 200, such as a train or a bus, and communicates with a management apparatus 20 via a communication network 300 including the Internet, etc. The management apparatus 20 is, for example, a server (for example, a web server) connected to the communication network 300. The user U_{A} carrying a terminal device 30 boards the vehicle 200. The terminal device 30 is a portable communication terminal, for example, a mobile phone handset or a smartphone. In actuality, many users U_{A} in the vehicle 200 can utilize services of the information management apparatus 20, but in the following explanation a single terminal device 30 is focused on for ease of description.

A guide person U_{B} managing the vehicle 200, such as a driver or a conductor, is the source of a voice G which provides guidance about transportation facilities (hereafter, simply referred to as "guidance voice") at an appropriate time. By the guidance voice G, voices on a variety of information may be provided regarding operations of a transportation facility including, for example, voices of announcements of a name of a next stop (station or bus stop) or transfer to other lines; voices of announcements concerning facilities located in the vicinity of the next stop (for example, tourist information); voices of announcements on an operation status of a transportation facility (for example, an occurrence of a stop signal, delay, or the like); voices of announcements cautioning care to be taken while on board, or care to be taken in boarding or in getting off transport; and voices of announcements upon occurrence of emergency.

The information management system 100 of the first embodiment generates distribution information Q according to the guidance voice G spoken by the guide person U_{B}, and transmits the information to the terminal device 30. The distribution information Q is information required for the terminal device 30 to present information related to the guidance voice G (hereafter referred to as "related information") to the user U_{A}. The terminal device 30 of the first embodiment presents a text expressing the spoken content of the guidance voice G as the related information to the user U_{A}. Therefore, it is possible, for example, for a hearing-impaired person who has difficulty in hearing the guidance voice G, to understand the content of the guidance voice G.

Fig. 2 is a block diagram of the voice guidance system 10 and the management apparatus 20. As shown in Fig. 2, the voice guidance system 10 of the first embodiment includes a distribution terminal 12, a sound receiving device 14, an audio device 16, and a sound outputting device 18. The sound receiving device 14 is audio equipment (a microphone) for receiving ambient sound. Specifically, the sound receiving device 14 receives the guidance voice G spoken by the guide person U_{B}, and generates an audio signal S_{G} representative of the waveform of the guidance voice G. For descriptive purposes, illustration of an A/D converter for converting the analogue audio signal S_{G} generated by the sound receiving device 14 to digital format is omitted in the drawing. The guide person U_{B} of the first embodiment voices any one of multiple texts prepared in advance (hereafter referred to as "registered texts") as the guidance voice G. For example, with reference to an announcement book in which multiple registered texts are recorded, the guide person U_{B} selects a registered text suitable for the actual operation status of a transportation facility, and voices it as the guidance voice G. In other words, essentially, the content of the guidance voice G is prepared in advance, and is not freely decided by the guide person U_{B}.

The audio signal S_{G} generated by the sound receiving device 14 is supplied as an audio signal S_{A} to the sound outputting device 18 via the audio device 16. The audio device 16 executes audio processes, such as an amplification process and an adjustment process (for example, adjustment of frequency characteristics) for the audio signal S_{G}, thereby generating the audio signal S_{A}. The sound outputting device 18 is audio equipment (speaker) for outputting a sound corresponding to the audio signal S_{A} supplied by the audio device 16. Specifically, a guidance voice G represented by the audio signal S_{G} is outputted from the sound outputting device 18, for transmission to the user U_{A}. For descriptive purposes, illustration of the D/A converter for converting the digital audio signal S_{A} to analog format is omitted in the drawing. As will be understood from the above description, the voice guidance system 10 of the first embodiment is an audio system in which the distribution terminal 12 is connected with an existing in-car announcement system for outputting the guidance voice G from the sound outputting device 18 after processing by the audio device 16; the guidance voice G to be processed is received by the sound receiving device 14. It is of note that the configuration of the voice guidance system 10 is freely selected; for example, the elements of the distribution terminal 12, the sound receiving device 14, the audio device 16, and the sound outputting device 18 may be provided in a single apparatus.

The audio signal S_{G} generated by the sound receiving device 14 diverges from the path between the sound receiving device 14 and the audio device 16, and is supplied to the distribution terminal 12. Specifically, the audio signal S_{G} is supplied to the distribution terminal 12 via a wired or wireless path. The distribution terminal 12 is an information device for providing the terminal device 30 with distribution information Q corresponding to the guidance voice G represented by the audio signal S_{G} supplied from the sound receiving device 14. The distribution terminal 12 is realized by a portable terminal device, for example, a mobile phone, a smartphone, a tablet terminal, etc. The distribution terminal 12 of the first embodiment includes a control device 122 and a communication device 124, as illustrated in Fig. 2. The communication device 124 communicates with the management apparatus 20 via the communication network 300. The communication device 124 of the first embodiment is a wireless communication device that wirelessly communicates with the communication network 300.

The control device 122 is a processing device (for example, a CPU (Central Processing Unit)) for controlling overall operation of the distribution terminal 12. Multiple functions for acquiring and distributing distribution information Q corresponding to the guidance voice G (a voice acquirer 52 and a signal processor 54) can be achieved by executing a program by the control device 122, the program being stored in a known recording medium (not shown), such as a magnetic recording medium or a semiconductor recording medium.

The voice acquirer 52 acquires the audio signal S_{G} representative of the guidance voice G from the sound receiving device 14. The audio signal S_{G} acquired by the voice acquirer 52 is transmitted from the communication device 124 via the communication network 300 to the management apparatus 20. The management apparatus 20 receives the audio signal S_{G} transmitted from the voice guidance system 10, and generates distribution information Q for instructing the terminal device 30 to present the related information related to the guidance voice G represented by the audio signal S_{G}. The distribution information Q generated by the management apparatus 20 is transmitted from the management apparatus 20 to the voice guidance system 10. The communication device 124 receives the distribution information Q transmitted by the management apparatus 20 from the communication network 300.

The signal processor 54 generates an audio signal S_{Q} containing the distribution information Q received at the communication device 124 from the management apparatus 20 as a sound component. To generate the audio signal S_{Q} by the signal processor 54, a known technique may be freely adopted. For example, a configuration in which a carrier wave, such as a sine wave having a predetermined frequency, is frequency-modulated with the use of the distribution information Q, thereby generating an audio signal S_{Q}; or preferable is a configuration that sequentially executes spreading modulation of the distribution information Q with the use of a spreading code and frequency conversion with the use of a carrier wave of a predetermined frequency, thereby generating an audio signal S_{Q}. The frequency band of the audio signal S_{Q} is a frequency band within which sound output by the sound outputting device 18 and sound reception by the audio device 16 is possible. The frequency band of the audio signal S_{Q} falls within a range of a frequency band (for example, from 18 kHz to 20 kHz) that is higher than a sound frequency band of sound such as a voice (for example, the guidance voice G), music, etc., audible to a user in an ordinary environment. However, the frequency band of the audio signal S_{Q} may be freely set: for example, an audio signal S_{Q} within the audible frequency band may be generated.

The audio signal S_{Q} generated by the signal processor 54 is supplied to the sound outputting device 18 as an audio signal S_{A} after processing by the audio device 16. In other words, the audio signal S_{A} including the sound component corresponding to the distribution information Q (audio signal S_{Q}) is supplied to the sound outputting device 18, and the sound component corresponding to the distribution information Q is outputted as sound from the sound outputting device 18. The audio device 16 may combine the audio signal S_{G} and the audio signal S_{Q} to generate the audio signal S_{A}.

As will be understood from the above description, the sound outputting device 18 of the first embodiment serves as means for transmitting distribution information Q to the terminal device 30 (transmitter) via sound communication using sound (sound waves) that is aerial vibration acting as a transmission medium. In other words, the sound outputting device 18 outputs the guidance voice G received by the sound receiving device 14, and further transmits the distribution information Q to the terminal device 30 by output of sound including distribution information Q. In the above configuration, the sound outputting device 18 outputting the guidance voice G is also used for the transmission of the distribution information Q, and as a result the above configuration has an advantage in that the configuration of the voice guidance system 10 can be simplified in comparison with a configuration in which another device that is different from the sound outputting device 18 transmits the distribution information Q to the terminal device 30.

The management apparatus 20 shown in Fig. 2 is an apparatus for managing the distribution information Q that should be provided to the terminal device 30, and includes a control device 22, a storage device 24, and a communication device 26. The management apparatus 20 may be constructed as a single apparatus or as multiple devices (i.e., a computer system) configured separately from each other. For example, the storage device 24 may be provided as cloud storage separate from the management apparatus 20, and the control device 22 may read and/or write to the storage device 24 via, for example, the communication network 300. In other words, the storage device 24 may be omitted from the management apparatus 20.

The control device 22 is a processing device (for example, a CPU) that controls overall operation of the management apparatus 20. The communication device 26 communicates with the distribution terminal 12 via the communication network 300. For example, the communication device 26 receives the audio signal S_{G} transmitted from the distribution terminal 12, and transmits distribution information Q corresponding to the audio signal S_{G} to the distribution terminal 12. The storage device 24 stores programs executed by the control device 22 and various data used by the control device 22. A known recording medium, such as a magnetic recording medium or a semiconductor recording medium, or a combination of multiple types of recording media may be freely adopted as the storage device 24. The storage device 24 of the first embodiment stores a guidance table T_{A}.

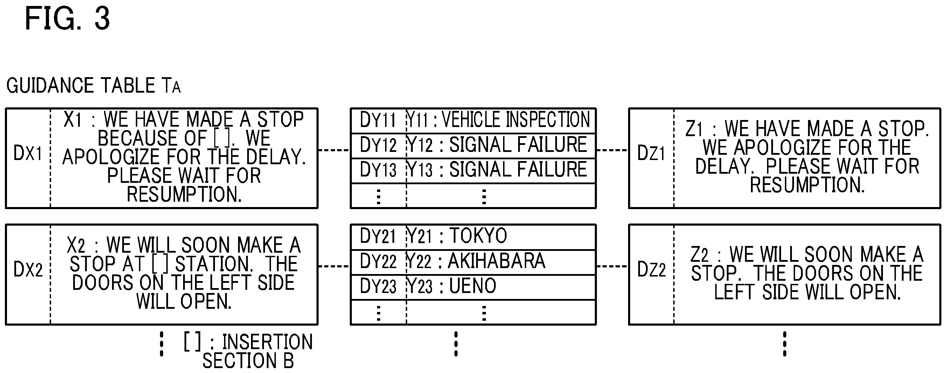

Fig. 3 is a schematic diagram of the guidance table T_{A}. As shown in Fig. 3, in the guidance table T_{A}, there are registered multiple registered texts X (X₁, X₂, ...) that are expected to be spoken by the guide person U_{B}, together with identification information D_{X} (D_{X1}, D_{X2}, ...) for each registered text X. As shown in Fig. 3, each registered text X of the first embodiment contains a single insertion section B. In Fig. 3, the insertion section B is denoted by square brackets []. In the insertion section B, any one of multiple texts (hereinafter referred to as "insertion phrases") Y is selectively inserted. In other words, the registered text X is a typical text (typically, a sentence) common to multiple types of guidance in which the insertion phrase Y is made different, and each insertion phrase Y is a text (for example, a word) to be selected for each guidance and to be inserted into the insertion section B of registered text X. As shown in Fig. 3, for each of the multiple registered texts X, multiple insertion phrases Y (Y₁₁, Y₁₂, ...) that are candidates to be inserted into the insertion section B in the registered text X are registered in the guidance table T_{A} together with the identification information D_{Y} (D_{Y11}, D_{Y12}, ...) of each insertion phrase Y. For example, as shown in Fig. 3, for a registered text X₁ for informing the user U_{A} of an abnormal stop of the train, "We have made a stop because of [ ]. We apologize for the delay. Please wait for resumption.", multiple insertion phrases Y (Y₁₁, Y₁₂, Y₁₃, ...), such as "vehicle inspection", "signal failure", and "entry of a person in the railway", are registered for representing the cause of the abnormal stop. For a registered text X₂ for informing the next stop, "We will soon make a stop at [ ] station. The doors on the left side will open.", multiple insertion phrases Y (Y₂₁, Y₂₂, Y₂₃, ...), such as "Tokyo", "Akihabara", and "Ueno", are registered for candidates of the station name to be inserted into the insertion section B in the registered text X₂. The content and/or total number of the insertion phrases Y that can be inserted into the insertion section B may differ depending on the registered texts X.

As shown in Fig. 3, the guidance table T_{A} contains identification information D_{Z} (D_{Z1}, D_{Z2}, ...) for multiple texts D (hereafter referred to as "modified texts" D) corresponding to different registered texts X. The identification information D_{Z} is a symbol for uniquely identifying the modified text Z. A modified text Z corresponding to any one of the registered texts X is a text that is similar or common to the registered text X in content, but is partially different from the registered text X in expression. Specifically, as shown in Fig. 3, for the registered text X₁, "We have made a stop because of [ ]. We apologize for the delay. Please wait for resumption.", for informing the user U_{A} of an abnormal stop of the train, a modified text Z₁ is registered, reading "We have made a stop. We apologize for the delay. Please wait for resumption.", with "because of [ ]" including the insertion section B being deleted from the registered text X_{1.} For the registered text X₂, "We will soon make a stop at [ ] station. The doors on the left side will open.", a modified text Z₂ is registered, reading "We will soon make a stop. The doors on the left side will open.", with "at [ ] station", including the insertion section B for a station name, being deleted from the registered text X₂.

Fig. 3 shows an example of a single guidance table T_{A} in which a registered text X is associated with multiple insertion phrases Y and a modified text Z, but the data format for defining the relationship among a registered text X, multiple insertion phrases Y, and a modified text Z is not fixed. For example, it is possible to define the relationship among a registered text X, multiple insertion phrases Y, and a modified text Z by use of multiple tables. Specifically, it is possible to prepare a table representing a relationship between a registered text X and a modified text Z, in addition to a table representing the relationship between a registered text X and multiple insertion phrases Y. In Fig. 3, modified texts Z are illustrated along with the identification information D_{Z} for descriptive purposes, but if the identification information D_{Z} is registered with the guidance table T_{A}, it is not necessary to register the modified texts Z themselves.

The control device 22 in Fig. 2 executes a program stored in the storage device 24, thereby realizing multiple functions (a voice analyzer 62, a text identifier 64, and an information generator 66) for generating distribution information Q corresponding to the audio signal S_{G} of the guidance voice G. It should be noted that a configuration in which part of the functions of the control device 22 is realized by a dedicated electronic circuit or a configuration in which the function of the control device 22 are collaboratively realized by multiple devices.

The voice analyzer 62 identifies a text (hereafter referred to as "input text") L representative of the speech content of the guidance voice G by use of speech recognition performed on the audio signal S_{G} received by the communication device 26 from the distribution terminal 12. In other words, the input text L is a text spoken by the guide person U_{B}. For performing speech recognition to represent the guidance voice G there may be freely adopted a known technique, for example, recognition processing utilizing an audio model, such as the HMM (Hidden Markov Model), and a language model indicating language constraints.

As mentioned above, the guide person U_{B} basically speaks one of the texts X registered in the announcement book, etc., prepared beforehand. Accordingly, ideally, the input text L identified through the speech recognition of the guidance voice G by means of the speech analyzer 62 matches any one of the registered texts X registered in the guidance table T_{A}. Actually, however, a recognition error may occur in the speech recognition by the voice analyzer 62 because of the pronunciation traits (habits) unique to each individual guide person U_{B}, noise and the like around the sound receiving device 14, etc. Therefore, the input text L and the registered text X may be similar to each other, but be different partially from each other.

In view of the above, the text identifier 64 of the first embodiment identifies a registered text X similar to the input text L identified by the voice analyzer 62 among the multiple different registered texts X. Specifically, the text identifier 64 identifies a registered text X similar to the input text L identified by the speech analyzer 62 among the multiple registered texts X registered in the guidance table T_{A}, and identifies an insertion phrase Y corresponding to the input text L among the multiple insertion phrases Y corresponding to the registered text X.

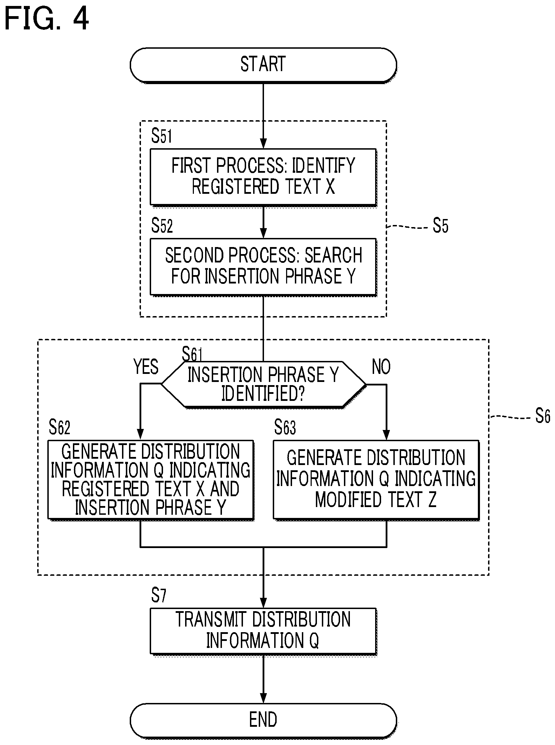

Fig. 4 is a flowchart of operation of the text identifier 64 and the information generator 66 of the first embodiment. The processing of Fig. 4 is started each time an input text L is identified by the voice analyzer 62.

As shown in Fig. 4, the text identifier 64 of the first embodiment sequentially executes a first process S₅₁ and a second process S₅₂ (S₅). The first process S₅₁ is a process of identifying a registered text X similar to the input text L from among the multiple registered texts X in the guidance table T_{A}. Specifically, the text identifier 64 calculates an similarity index with the input text L (hereinafter referred to as "similarity index") for each of multiple registered texts X in the guidance table T_{A}, and identifies a registered text X having the maximum similarity degree indicated by the similarity index from among the multiple registered texts X (that is, a registered text X that is most similar to the input text L). Although the type of similarity index is freely chosen, a known index, such as an edit distance (Levenshtein distance) for evaluating similarity between multiple texts may be freely adopted as the similarity index. The method of identifying the registered text X that is similar to the input text L is freely selected. For example, a process of identifying a registered text X including a specific text (for example, a word or phrase belonging to a specific word class or phrase class) included in the input text L may be adopted as the first process S₅₁. Alternatively, a process of identifying a registered text X similar to the input text L, using a recognition model generated in advance by machine learning using feature quantities extracted from a large number of texts is also preferable as the first process S₅₁.

The second process S₅₂ shown in Fig. 4 is a process of searching for an insertion phrase Y corresponding to the input text L among the multiple insertion phrases Y corresponding to the registered text X identified at the first process S₅₁. Specifically, the text identifier 64 sequentially compares each of the multiple insertion phrases Y corresponding to the registered text X with the input text L to identify an insertion phrase Y included in the input text L. The method of identifying an insertion phrase Y corresponding to the input text L is freely chosen. For example, a process of searching for the insertion phrase Y among the whole input text L, as well as, a process of comparing the part corresponding to the insertion section B of the registered text X among the input text L with each insertion phrase Y, and thereby discriminating between the part and each insertion phrase Y may be adopted as the second process S₅₂. In addition, a process in which the above-mentioned similarity index for each of the multiple insertion phrases Y with the input text L is calculated, and an insertion phrase Y in the input text L is identified according to the similarity index of each insertion phrase Y is also preferable as the second process S₅₂. However, since basically, there will be no many types of insertion phrases Y for the guidance voice G, the above-mentioned process in which each insertion phrase Y is sequentially compared with the input text L can practically identify a suitable insertion phrase Y.

The information generator 66 in Fig. 2 generates distribution information Q for indicating to the terminal device 30 related information according to the processing result of the voice analyzer 62 and the text identifier 64 (S₆). As mentioned above, the registered text X similar to the input text L is identified at the first process S₅₁ by means of the text identifier 64, whereas the insertion phrase Y corresponding to the input text L (typically the insertion phrase Y contained in the input text L) among the multiple insertion phrases Y is searched for at the second process S₅₂. If the pronunciation of the guidance voice G by the guide person U_{B} and speech recognition by the voice analyzer 62 are correct, it is possible to properly specify both the registered text X and the insertion phrase Y corresponding to the input text L. However, if the guide person U_{B} makes a pronunciation error (for example, if the guide person U_{B} speaks a phrase other than the prescribed phrase recorded in the announcement book) or the voice analyzer 62 makes a recognition error, there is a possibility that the insertion phrase Y corresponding to the input text L cannot be identified from among the multiple insertion phrases Y corresponding to the registered text X identified at the first process S₅₁.

As shown in Fig. 4, the information generator 66 of the first embodiment decides, at S₆₁, whether an insertion phrase Y corresponding to the input text L is identified at the second process S₅₂ by the text identifier 64. If an insertion phrase Y is identified at the second process S₅₂ (if the decision at S₆₁ is affirmative), the information generator 66 generates distribution information Q indicating, as related information, a text in which the insertion phrase Y identified at the second process S₅₂ is inserted into the insertion section B of the registered text X identified at the first process S₅₁ (S₆₂). Specifically, the information generator 66 acquires the identification information D_{X} of the registered text X identified at the first process S₅₁ and the identification information D_{Y} of the insertion phrase Y identified at the second process S₅₂ from the guidance table T_{A}, and generates distribution information Q containing this identification information D_{X} and D_{Y}.

On the other hand, if an insertion phrase Y is not identified at S₅₂ (if the decision at S₆₁ is negative), the information generator 66 generates distribution information Q that indicates a modified text Z corresponding to the registered text X identified at the first process S₅₁ (that is, a text which is partially different from the registered text X) as related information (S₆₃). Specifically, the information generator 66 obtains from the guidance table T_{A} identification information D_{Z} of the modified text Z corresponding to the registered text X, and generates the distribution information Q containing the identification information D_{Z}.

Specific phrases other than the multiple insertion phrases Y (hereafter referred to as "specific phrases") may be registered in the guidance table T_{A} in advance, and each of the specific phrases may be compared with the input text L at the second process S₅₂, as being similar to each of the multiple insertion phrases Y, so as to decide whether the specific phrase is included in the input text L. For example, phrases that are highly likely to be pronounced incorrectly by the guide person U_{B}, or phrases that may be misrecognized by the voice analyzer 62 are selected in advance as the specific phrases. In a case where the input text L includes one of the specific phrases, the information generator 66 decides that an insertion phrase Y is not identified at the second process S₅₂ (the decision at S₆₁ is negative). In other words, "insertion phrase Y is not identified" is intended to include a case where a specific phrase other than the insertion phrase Y is found in the input text L, in addition to the above example in which an insertion phrase Y is not actually identified.

Upon generating the distribution information Q at the process (S₆₂ or S₆₃) shown above, the information generator 66 transmits the distribution information Q from the communication device 26 to the distribution terminal 12 of the voice guidance system 10 (S₇). As mentioned above, in the audio guidance system 10, the signal processor 54 and the audio device 16 generate an audio signal S_{A} containing the distribution information Q received from the management apparatus 20 as the sound component, and the sound outputting device 18 outputs a sound corresponding to the audio signal S_{A} (that is, the sound including the distribution information Q). Practically, at a stage where the guide person U_{B} finishes voicing the guidance voice G, the input text L is identified by the voice analyzer 62, and generation and transmission of the distribution information Q are executed. Accordingly, the sound of the distribution information Q is outputted from the sound outputting device 18 at a time point behind the sound output of the guidance voice G.

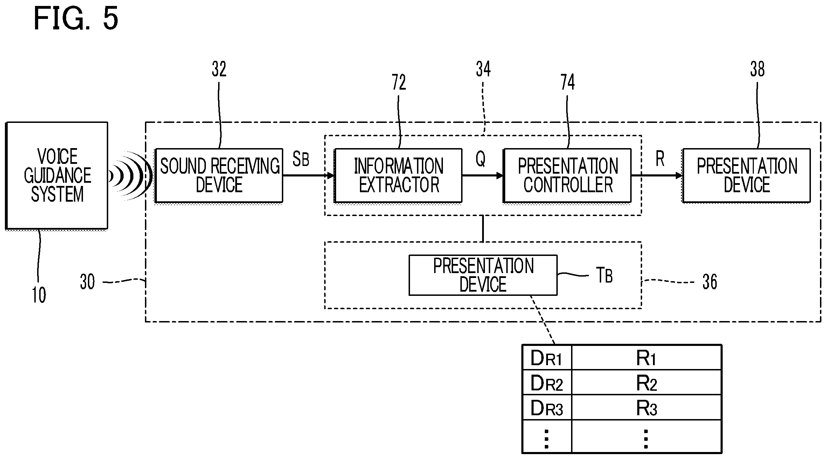

Fig. 5 is a block diagram of the terminal device 30. As shown in Fig. 5, the terminal device 30 includes a sound receiving device 32, a control device 34, a storage device 36, and a presentation device 38. The sound receiving device 32 is audio equipment (a microphone) for receiving ambient sound, and receives the sound outputted from the sound outputting device 18 in the voice guidance system 10 to generate the audio signal S_{B}. The audio signal S_{B} contains the sound component (audio signal S_{Q}) of the distribution information Q. In other words, the sound receiving device 32 serves as a means (a receiver) for receiving distribution information Q via sound communication, with aerial vibration acting as a transmission medium. For descriptive purposes, illustration of the A/D converter for converting the analog audio signal S_{B} generated by the sound receiving device 14 to digital format is omitted in the drawing.

The storage device 36 stores programs executed by the control device 34 and various data used by the control device 34. The control device 34 is a processing device (for example, a CPU) that controls overall operation of the terminal device 30. The control device 34 of the first embodiment executes a program stored in the storage device 36, thereby realizing multiple functions (information extractor 72 and presentation controller 74) for presenting to the user U_{A} related information according to distribution information Q.

The information extractor 72 extracts the distribution information Q with demodulation of the audio signal S_{B} generated by the sound receiving device 32. Specifically, the information extractor 72 performs a filtering process for emphasizing band components within the frequency band including the sound component of the distribution information Q and a demodulation process corresponding to the modulation process in the signal processor 54 for the audio signal S_{B} to extract the distribution information Q. The presentation controller 74 causes the presentation device 3 8 to present related information R indicated by the distribution information Q extracted by the information extractor 72. The presentation device 38 presents the related information R indicated by the presentation controller 74 to the user U_{A}. The presentation device 38 of the first embodiment is a display device (for example, a liquid crystal display panel) for displaying the related information R.

The guidance table T_{B} stored in the storage device 36 is used for the process in which the presentation controller 74 identifies the related information R indicated by the distribution information Q. As shown in Fig. 5, with the guidance table T_{B}, multiple related information pieces R (R₁, R₂, ...) that can be indicated by the distribution information Q are registered along with identification information D_{R} (D_{R1}, D_{R2}, ...) for each piece. The identification information D_{R} is defined as a combination of the identification information D_{X} of registered text X and the identification information D_{Y} of the insertion phrase Y, or as the identification information D_{Z} of the modified text Z. For the identification information D_{R} corresponding to the combination of the identification information D_{X} and the identification information D_{Y}, a text obtained by inserting the insertion phrase Y corresponding to the identification information D_{Y} into the insertion section B of the registered text X having the identification information D_{X} is registered as the related information R. On the other hand, for the identification information D_{R} having the identification information D_{Z}, the modified text Z having the relevant identification information D_{Z} is registered as the related information R.

If the distribution information Q contains identification information D_{X} and identification information D_{Y} (that is, if a text resulting from insertion of an insertion phrase Y into a registered text X as a result of identifying the insertion phrase Y at the second process S₅₂ is indicated as the related information R), the presentation controller 74 identifies the related information R of the identification information D_{R} corresponding to the combination of the identification information D_{X} and the identification information D_{Y} in the guidance table T_{B}, and causes the presentation device 38 to present it. Therefore, a text obtained by inserting the insertion phrase Y included in the input text L into the insertion section B of the registered text X that is similar to the speech content of the guidance voice G (the input text L) (that is, one or more sentences generally coincident with the speech content of the guidance voice G) is presented to the user U_{A} as related information R.

On the other hand, if the distribution information Q contains identification information D_{Z} (that is, if an insertion phrase Y is not identified at the second process S₅₂, and therefore a modified text Z is indicated as related information R), the presentation controller 74 identifies the related information R of the identification information D_{R} corresponding to the identification information D_{Z} in the guidance table T_{B}, and causes the presentation device 38 to present the information. Therefore, a modified text Z (that is, one or more sentences that are partially different from the speech content of the guidance voice G) that is partially changed from the registered text X similar to the speech content of the guidance voice G is presented to the user U_{A} as related information R. As will be understood from the above description, the registered texts X may be defined as texts that are used for comparison with the input text L for presentation to the user U_{A}, whereas the modified texts Z may be defined as texts that are used for presentation to the user U_{A}, and are not used for comparison with the input text L.

In the above example, the combination of the identification information D_{X} and the identification information D_{Y} is shown as the identification information D_{R} for the related information R, but each of the identification information D_{X} and the identification information D_{Y} may be registered as identification information D_{R} for related information pieces R (the registered text X and the insertion phrase Y) with the guidance table T_{B}. The presentation controller 74 may acquire related information R (a registered text X) having the identification information D_{R} corresponding to the identification information D_{X} specified by the distribution information Q, acquire related information R (insertion phrase Y) having the identification information D_{R} corresponding to the identification information D_{Y} specified by the distribution information Q, and cause the presentation device 38 to present a text obtained by combining related information R (a registered text X) and related information R (insertion phrase Y) to the user U_{A} as the related information R.

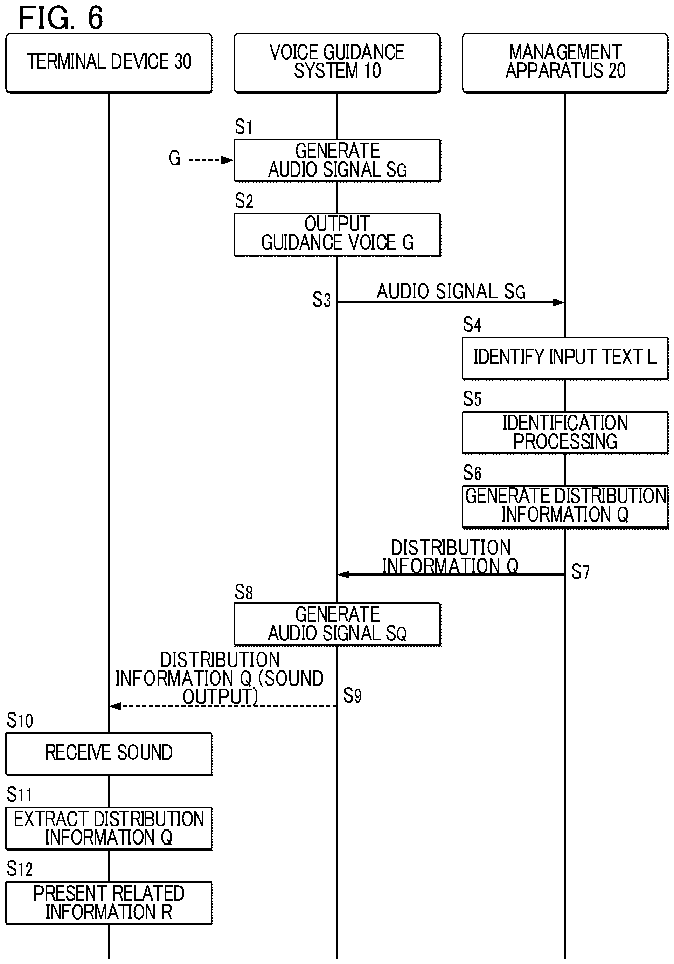

Fig. 6 is an explanatory diagram of the overall operation of the information management system 100. The sound receiving device 14 of the voice guidance system 10 receives the guidance voice G spoken by the guide person U_{B}, and generates an audio signal S_{G} (S₁). The audio signal S_{G} is supplied to the sound outputting device 18 and outputted as sound (S₂), and is transmitted from the communication device 124 of the distribution terminal 12 to the management apparatus 20 (S₃).

Upon receiving the audio signal S_{G} at the communication device 26, the management apparatus 20 sequentially executes the identification of the input text L by the voice analyzer 62 (S₄), the identification processing by the text identifier 64 (S₅: S₅₁, S₅₂), the generation of the distribution information Q by the information generator 66 (S₆: S₆₁ to S₆₃), and the transmission of the distribution information Q (S₇). At the distribution terminal 12, an audio signal S_{Q} including the sound component of the distribution information Q is generated (Sg), and the distribution information Q is transmitted to the terminal device 30 as a result of reproduction of sound by the sound outputting device 18 on the basis of the audio signal S_{Q} (S₉).

The sound outputted by the sound outputting device 18 is received by the sound receiving device 32 of the terminal device 30 (S₁₀). In the terminal device 30, the information extractor 72 extracts the distribution information Q from the audio signal S_{B} generated by the sound receiving device 32 (S₁₁) by receiving sound, and the information generator 66 acquires related information R corresponding to the distribution information Q from the guidance table T_{B}, and causes the presentation device 38 to present the information to the user U_{A} (S₁₂). Therefore, while listening to the guidance voice G outputted from the sound outputting device 18, the user U_{A} can confirm the related information R corresponding to the guidance voice G by way of the display of the presentation device 38.

As will be understood from the above description, in the first embodiment, a registered text X similar to the input text L identified by speech recognition of the guidance voice G is identified from among the multiple registered texts X. Therefore, as compared with, for example, a configuration in which the input text L identified from the guidance voice G is presented as related information R to the user U_{A} of the terminal device 30, more suitable related information R can be presented to the user U_{A} with less influence being caused by a voice recognition error.

In addition, since a modified text Z partially different from the registered text X identified by the text identifier 64 is presented to the user U_{A} of the terminal device 30 as related information R, an advantage is obtained in that the modified text Z that is partially changed from the registered text X is presented to the user U_{A} of the terminal device 30 while the registered texts X that are supposed to be used as guidance voices G are used for comparison with the input text L. In the first embodiment, if an insertion phrase Y included in the input text L is identified at the second process S₅₂, a text obtained by inserting the insertion phrase Y into the insertion section B of the registered text X is presented as related information R, whereas if an insertion phrase Y is not identified at the second process S₅₂, a modified text Z is presented as related information R. Accordingly, even if the guide person U_{B} makes a mispronunciation (for example, if the guide person U_{B} speaks a phrase other than suitable phrases) or the voice analyzer 62 makes a recognition error, it is possible to reduce a possibility of presenting to the user U_{A} related information R containing an incorrect phrase.

### SECOND EMBODIMENT

A second embodiment of the present invention will now be described. In the following description, the same reference symbols are used for identifying elements of which actions or functions are the same as in the first embodiment, and detailed explanation of the elements will be omitted as appropriate.

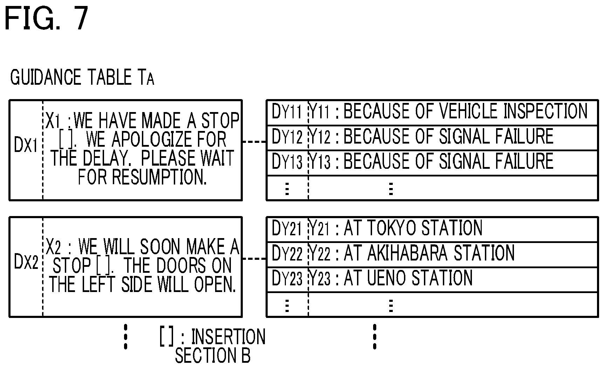

Fig. 7 is a schematic diagram of the guidance table T_{A} in the second embodiment. As shown in Fig. 7, multiple registered texts X each including an insertion section B are registered with the guidance table T_{A} of the second embodiment, as similar to the first embodiment. The registered text X in the second embodiment is a text that does not become linguistically unnatural even if the insertion section B is deleted. Specifically, a registered text X₁, "We have made a stop [ ]. We apologize for the delay. Please wait for resumption.", is registered with the guidance table T_{A}.

In the guidance table T_{A} of the second embodiment, for each registered text X, multiple insertion phrases Y that can be inserted into the insertion section B of the registered text X are registered. For example, for the aforementioned registered text X₁, multiple insertion phrases Y (Y₁₁, Y₁₂, Y₁₃, ...), such as "because of vehicle inspection", "because of signal failure", and "because of entry of a person in the railway" are registered. For the registered text X₂, "We will soon make a stop [ ]. The doors on the left side will open.", multiple insertion phrases Y (Y₂₁, Y₂₂, Y₂₃, ...), such as "at Tokyo station", "at Akihabara station", and "at Ueno station", are registered. In the second embodiment, the modified text Z is not registered with the guidance table T_{A}.

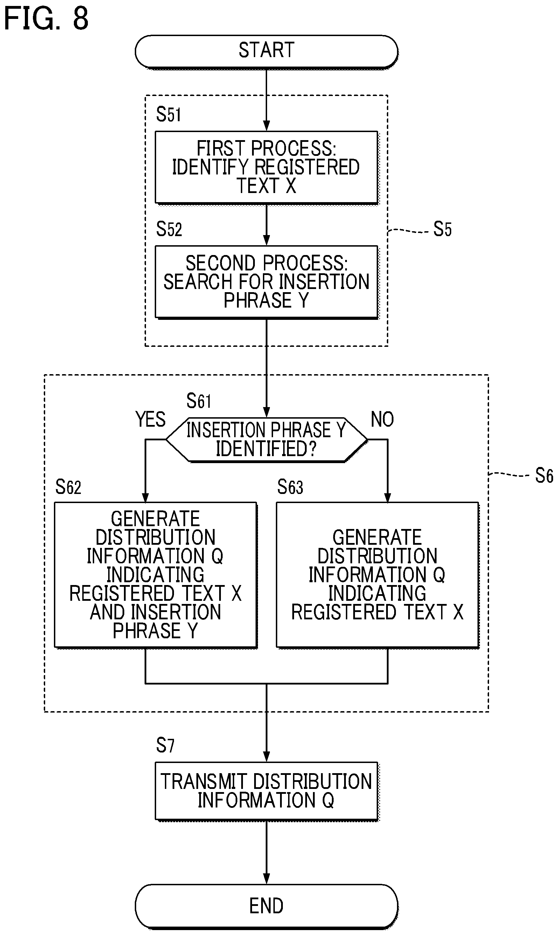

Fig. 8 is a flowchart of operation of the text identifier 64 and the information generator 66 in the second embodiment. The processing in Fig. 4 shown in the first embodiment is replaced with the processing in Fig. 8 in the second embodiment. As in the first embodiment, the processing of Fig. 8 is started each time an input text L is identified by the voice analyzer 62.

As similar to the first embodiment, the text identifier 64 of the second embodiment executes a first process S₅₁ of identifying a registered text X similar to the input text L from among the multiple registered texts X, and a second process S₅₂ of searching among the multiple insertion phrases Y for an insertion phrase Y corresponding to the input text L corresponding to the registered text X. Similar to the first embodiment, the information generator 66 decides, at S₆₁, whether an insertion phrase Y corresponding to the input text L is identified at the second process S₅₂. If an insertion phrase Y is identified (if the decision at S₆₁ is affirmative), the information generator 66 generates distribution information Q that indicates a combination of the registered text X and the insertion phrase Y (S₆₂). On the other hand, if an insertion phrase Y is not identified at the second process S₅₂ (if the decision at S₆₁ is negative), the information generator 66 generates distribution information Q that indicates the registered text X as related information R (specifically, distribution information Q including the identification D_{X} for the registered text X) (S₆₃), and transmits the related information R from the communication device 26 to the voice guidance system 10 (S₇).

As similar to the first embodiment, sound including the distribution information Q is outputted from the sound outputting device 18, and the distribution information Q is extracted from the audio signal SB at the terminal device 30. If an insertion phrase Y is identified at the second process S₅₂, as similar to the first embodiment, related information R corresponding to a combination of the identification information D_{X} and the identification information D_{Y} is presented to the user U_{A} by the presentation device 38. On the other hand, if an insertion phrase Y is not identified at S₅₂, a registration text X corresponding to the identification information D_{X} designated by the distribution information Q (preferably, a text obtained by removing the insertion section B of the registered text X) is presented to the user U_{A} as related information R. In other words, if an insertion phrase Y is not identified at the second process S₅₂, the information generator 66 of the second embodiment generates related information R that indicates a text obtained by removing the insertion section B from the registered text X as related information R.

If there is announced an unusual reason for stopping, such as a case where there is announced "We have stopped due to a meteorite impact. We apologize for the delay. Please wait for resumption,", there is presented, to the user U_{A}, linguistically natural related information R that is "We have stopped. We apologize for the delay. Please wait for resumption." In addition, where there is identified an erroneous input text L as a result of a recognition error by the voice analyzer 62, for example when a guidance voice G announces "We have made a stop because of a malfunction of the vehicle. We apologize for the delay. Please wait for resumption", an erroneous input text L reads "We have made a stop because of trouble on the company president. We apologize for the delay. Please wait for resumption" (It is of note here that in Japanese "malfunction of the vehicle" is *"sharyou koshou",* whereas "trouble on the company president" is *"syachou koshou"*), even in this case, linguistically natural related information R that is "We have made a stop. We apologize for the delay. Please wait for resumption." is presented to the user U_{A}.

In the second embodiment as well as the first embodiment, since a registered text X similar to the input text L identified by the speech recognition of the guidance voice G is identified from among the multiple registered texts X, suitable related information R can be presented to the user U_{A} with less influence being caused by speech recognition error. In addition, in the second embodiment, if an insertion phrase Y corresponding to the input text L is identified at the second process S₅₂, distribution information Q that indicates a text obtained by inserting the insertion phrase Y into the insertion section B of the registered text X as related information R is generated, whereas if an insertion phrase Y corresponding to the input text L is not identified at the second process S₅₂, distribution information Q that indicates a text obtained by removing the insertion section B from the registered text X as related information R is generated. Accordingly, even if the guide person U_{B} makes a mispronunciation (for example, if the guide person U_{B} speaks a phrase other than predicted insertion phrases Y) or a recognition error is made for the guidance voice G, it is possible to reduce a possibility of presenting to the user U_{A} related information R containing an incorrect phrase.

### THIRD EMBODIMENT

In the third embodiment, it is assumed that the information management system 100 is used to provide information to the user U_{A} located in a commercial facility (for example, a shopping mall). The voice guidance system 10 of the information management system 100 is provided in a commercial facility, whereas the management apparatus 20 is connected to the communication network 300 as similar to the first embodiment.

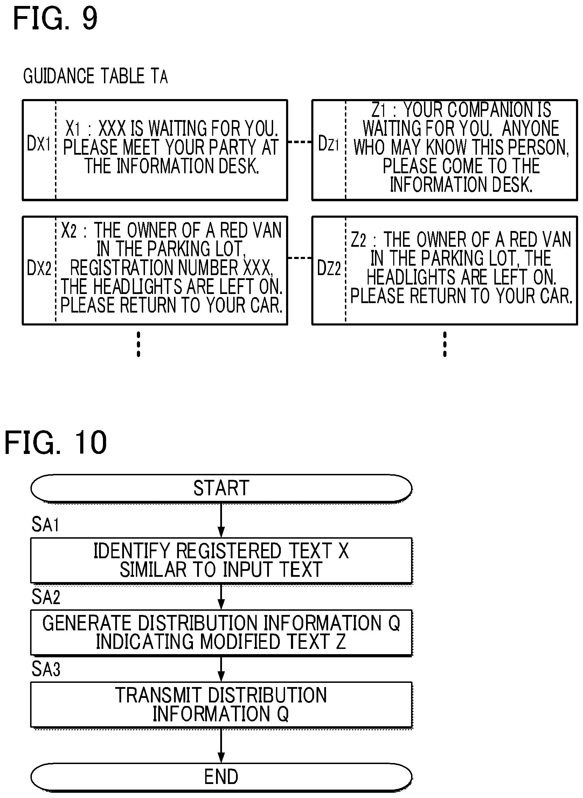

Fig. 9 is a schematic diagram of the guidance table T_{A} used in the management apparatus 20 in the third embodiment. As shown in Fig. 9, with the guidance table T_{A} of the third embodiment, multiple registered texts X (X₁, X₂, ...) that are expected to be spoken by the guide person U_{B} are registered. Each registered text X in the third embodiment is a text excluding a portion that can be changed for each guidance from a speech content assumed as a guidance voice G. For example, for a guidance voice G regarding customers visiting the commercial facility together, but who become separated from each other, for informing a customer of a separated companion's location, "XYZ from ABC city is waiting for you. Please meet your party at the information desk.", a registered text X₁ excluding a part that can be changed depending on guidance situation (the place of residence and the name), "xxx is waiting for you. Please meet your party at the information desk." is registered with the guidance table T_{A}. The symbol xxx means a blank. For a guidance voice G, "The owner of a red van in the parking lot, registration number 'Ward A 12-3456', the headlights are left on. Please return to your car.", a registered text X₂ excluding a part that can be changed depending on guidance situation (the registration number), reading "The owner of a red van in the parking lot, registration number xxx, the headlights are left on. Please return to your car." is registered in the guidance table T_{A}.

As shown in Fig. 9, the guidance table T_{A} of the third embodiment includes the identification information pieces D_{Z} for multiple modified texts Z corresponding to different registered texts X, as in the first embodiment. A modified text Z corresponding to any one of the registered texts X is a text that is similar or common to the registered text X in content, but is partially different from the registered text X in expression. Specifically, as shown in Fig. 9, for the registered text X₁, reading "xxx is waiting for you. Please meet your party at the information desk.", a modified text Z₁, reading "Your companion is waiting for you. Anyone who may know this person, please come to the information desk.", in which "xxx" is replaced with "Your companion" and "please meet your party" is replaced with "anyone who may know this person, please come to" in the registered text X₁, is registered. For the registered text X₂, reading "The owner of a red van in the parking lot, registration number xxx, the headlights are left on. Please return to your car.", a modified text Z₂ is registered, with "The owner of a red van in the parking lot, the headlights are left on. Please return to your car.", in which "registration number xxx," being deleted from the registered text X₂. As will be understood from the above description, the registered text X is a text excluding a variable part of each speech content assumed for the guidance voice G, and is linguistically unnatural because it excludes a variable part although it is similar to the speech content of the guidance voice G. On the other hand, the modified text Z does not match the speech content of the guidance voice G compared with the registered text X, but it is a natural text linguistically. The modified text Z can also be defined as a text excluding the part of personal information (the place of residence, name, registration number, etc.) of the guidance voice G. If the identification information D_{Z} for the modified text Z is registered with the guidance table T_{A}, the modified text Z itself need not be registered with the guidance table T_{A}.

Fig. 10 is a flowchart of operation of the text identifier 64 and the information generator 66 in the third embodiment. The processing in Fig. 4 illustrated in the first embodiment is replaced with the processing in Fig. 10 in the third embodiment. As in the first embodiment, the processing of Fig. 10 is started each time an input text L is identified by the voice analyzer 62.

The text identifier 64 of the third embodiment identifies a registered text X similar to the input text L from among the multiple registered texts X in the guidance table T_{A} (S_{A1}). Processing similar to the first process S₅₁ shown in the first embodiment is used for the identification (S_{A1}) of the registered text X. As described above, in the third embodiment, since a registered text X similar to the input text L identified by the speech recognition of the guidance voice G is identified, suitable related information R can be presented to the user U_{A} with a recognition error in speech recognition having little influence, as in the first embodiment.

The information generator 66 generates distribution information Q that indicates as related information R a modified text Z corresponding to the registered text X identified by the text identifier 64 (S_{A2}). Specifically, the information generator 66 generates distribution information Q including the identification information D_{Z} of the modified text Z associated with the registered text X in the guidance table T_{A}. The information generator 66 transmits the distribution information Q generated by the above procedure from the communication device 26 to the voice guidance system 10 (S_{A3}).

The subsequent processing is the same as the first embodiment. In other words, sound including distribution information Q is outputted from the sound outputting device 18. At the terminal device 30, the presentation device 38 presents the modified text Z indicated by the distribution information Q extracted from the audio signal SB as related information R to the user U_{A}. Therefore, for example, in conjunction with a guidance voice G, "XYZ from ABC city is waiting for you. Please meet your party at the information booth.", a modified text Z₁, reading "Your companion is waiting for you. Anyone who may know of this person, Please come to the information desk." is presented to the user U_{A} by the presentation device 38. In addition, in parallel to a guidance voice G, "The owner of a red van in the parking lot, registration number 'Ward A 12-3456', the headlights are left on. Please return to your car.", a modified text Z₂, reading "The owner of a red van in the parking lot, the headlights are left on. Please return to your car." is presented to the user U_{A} by the presentation device 38. In other words, the modified text Z that excludes personal information (the place of residence, name, registration number, etc.) from the guidance voice G is presented by the presentation device 3 8 to the user U_{A}. Therefore, it is possible to protect personal information.

In the third embodiment, similar to the first embodiment, since a modified text Z partially different from the registered text X identified by the text identifier 64 is presented to the user U_{A} of the terminal device 30 as related information R, an advantage is obtained in that the modified text Z, partially changed from the registered text X, is presented to the user U_{A} of the terminal device 30 while the registered text X prepared to be voiced as guidance voices G is used for comparison with the input text L.

In the first to third embodiments shown above, related information R in the same language as in the guidance voice G is presented to the user U_{A}, but a text translated from the guidance voice G to another language can be presented as related information R to the user U_{A} of the terminal device 30. Specifically, texts in languages different from that of guidance voices G may be registered with the guidance table T_{B} as related information R. According to the above configuration, since related information R corresponding to a translation text of a guidance voice G is presented to the user U_{A} in parallel to sound reproduction of the guidance voice G, the related information will be useful for foreigners who cannot understand the language of the guidance voice G.

As will be understood from the above examples, related information R in the first and third embodiments can be defined as information corresponding to the modified texts Z partially different from the registered texts X identified by the text identifier 64, and include, in addition to the modified texts Z themselves, voice expressions of the modified texts Z, translated modified texts, and voice expressions of the translated modified texts. Related information R in the second embodiment can be defined as information corresponding to the texts obtained by inserting the insertion phrases Y into the insertion section B of the registered texts X (see S₆₂), or as information pieces corresponding the texts obtained by removing the insertion section B from the registered texts X (see S₆₃), and include, in addition to the texts themselves, voice expressions of the texts, translated texts, and voice expressions of the translated texts.

### FOURTH EMBODIMENT

In the first to third embodiments, the distribution information Q that instructs the terminal device 30 to present related information R is sent from the information management system 100. In the fourth embodiment, the information management system 100 generates related information R corresponding to the guidance voice G, and provides it to the user U_{A}. Operation of the voice analyzer 62 and the text identifier 64 is the same as in the above-described embodiments. Thus, similarly to the above-described embodiments, it is possible to present appropriate related information R to the user U_{A} with reduced influence of a speech recognition error.

If an insertion phrase Y is identified at the second process S₅₂ (if the decision at S₆₁ is affirmative), the information generator 66 of the fourth embodiment generates, as related information R, a text that is translated to another language from a text having the registered text X into which the insertion phrase Y is inserted. On the other hand, if an insertion phrase Y is not identified at the second process S₅₂ (if the decision at S₆₁ is negative), the information generator 66 generates, as related information R, a text that is translated to another language from the modified text Z corresponding to the registered text X identified at the first process S₅₁. In other words, the information generator 66 in the fourth embodiment generates related information piece R corresponding to a modified text Z partially changed from the registered text X identified by the text identifier 64. For translation of texts, for example, a known machine translation technique can be adopted in a freely-selected manner. Related information R generated by the information generator 66 is transmitted to the distribution terminal 12 of the voice guidance system 10.

The signal processor 54 of the distribution terminal 12 generates an audio signal S_{Q} by means of speech synthesis to which related information R is applied. The audio signal S_{Q} in the fourth embodiment is a signal representing a sound of a spoken text specified by related information R. To generate the audio signal S_{Q}, known speech synthesis can be freely adopted. The audio signal S_{Q} generated by the signal processor 54 is supplied to the sound outputting device 18 via the audio device 16. Thus, a speech sound of the text identified by related information R is outputted from the sound outputting device 18. In other words, following the guidance voice G spoken by the guide person U_{B}, another voice translated from the guidance voice G to another language is outputted from the sound outputting device 18 to the user U_{A}. For example, if a translation text of a modified text Z is generated as related information R, a speech sound of the translation text of the modified text Z partially changed from the registered text X corresponding to the guidance voice G is outputted following the guidance voice G.

In the above description, a configuration based on the first embodiment is discussed, but identification of a text in the second embodiment or the third embodiment may be applied to the fourth embodiment. For example, if an insertion phrase Y is identified at the second process S₅₂ (if the decision at S₆₁ is affirmative), the information generator 66 in the fourth embodiment generates, as related information R, a text that is translated to another language from a text having the registered text X into which the insertion phrase Y is inserted. On the other hand, if an insertion phrase Y is not identified at the second process S₅₂ (if the decision at S₆₁ is negative), the information generator 66 generates, as related information R, a text that is translated to another language from a text obtained by removing the insertion section B from the registered text X identified at the first process S₅₁. Therefore, the voice of the translation text of the registered text X excluding the insertion section B is outputted from the sound outputting device 18 following the guidance voice G. In addition, assuming the third embodiment, the information generator 66 may generate related information R representing a text obtained by translating the modified text Z corresponding to the registered text X identified by the text identifier 64 into another language. With this configuration, the voice of the translation text of the modified text Z partially changed from the registered text X corresponding to the guidance voice G is outputted in conjunction with the guidance voice G.

As will be understood from the above description, the information management system 100 in the fourth embodiment is a system that generates related information R related to guidance voices G (and provides the user U_{A} with related information R), and includes the text identifier 64 that identifies a registered text X similar to the input text L identified by speech recognition of the guidance voice G from among the multiple registered texts X, and the information generator 66 that generates related information R corresponding to the registered text X identified by the text identifier 64. A typical example of related information R corresponding to the registered text X is a translation text of the modified text Z that is partially different from the registered text X, or a translation text of a text resulting from deletion of the insertion section B of the registered text X. In the above description, a configuration for outputting a speech sound of a text indicated by related information R from the sound outputting device 18 is shown; however, the method for outputting related information R is not limited to the above example. For example, it is also possible to display the text indicated by related information R on the display device.

### MODIFICATIONS

The above-shown embodiments may be variously modified. Specific modifications are shown below. Two or more variations freely selected from the following variations may be appropriately combined unless they are contradictory to each other.
(1) In the first to third embodiments, a display device displaying related information R is shown as the presentation device 38, but it is also possible to use a sound outputting device (for example, a speaker or a headphone) that outputs a sound corresponding to related information R (for example, sound corresponding to voiced related information R) as the presentation device 38.
(2) In the above-described embodiments, the management apparatus 20 includes the voice analyzer 62, the text identifier 64, and the information generator 66, but some or all of functions of the management apparatus 20 may be provided in the voice guidance system 10. For example, if the voice analyzer 62, the text identifier 64, and the information generator 66 are located in the distribution terminal 12 as variations of the first to third embodiments, analysis of the audio signal S_{G} (voice analyzer 62), identification of the text X (the text identifier 64), and generation of the distribution information Q (information generator 66) are executed at the distribution terminal 12, and the distribution information Q is transmitted from the sound outputting device 18 to the terminal device 30. In the variations, since communication between the voice guidance system 10 and the management apparatus 20 is unnecessary, the distribution information Q can be advantageously provided to the terminal device 30 even in an environment where communication using the communication network 300 cannot be made. If the third embodiment is modified in such a manner that the voice analyzer 62, the text identifier 64, and the information generator 66 are located in the distribution terminal 12, as a variation of the fourth embodiment, analysis of the audio signal S_{G}, identification of the text X, and generation of related information R (information generator 66) are performed at the distribution terminal 12, and related information R is transmitted from the sound outputting device 18 (or another output device such as a display device) to the user U_{A}.
(3) In the first embodiment, a case in which each registered text X includes one insertion section B has been illustrated for convenience for descriptive purposes, but each registered text X may include multiple insertion sections B. In the guidance table T_{A}, for each of multiple insertion section B of the registered texts X, multiple insertion phrases Y that can be inserted in the insertion section B may be registered. Specifically, for informing the user U_{A} of an abnormal stop of the train, a text, "We have made a stop because of [ ]. We apologize for the delay. Please [ ]." may be assumed. For the former insertion section B, multiple insertion phrases Y, such as "vehicle inspection", "signal failure", and "entry of a person in the railway" expressing the cause of the abnormal stop are registered, as in the first embodiment. For the latter insertion section B, other multiple insertion phrases Y, such as "wait for resumption" and "use a replacement train" representing actions the passengers are asked to undertake are registered.
(4) In the first embodiment, a case in which each registered text X includes an insertion section B has been illustrated for descriptive purposes, but a registered text X including an insertion section B and another registered text X not including an insertion section B may be registered with the guidance table T_{A}. If the text identifier 64 identifies a registered text X including an insertion section B, the same processing as in the first embodiment is executed, whereas if the text identifier 64 identifies a registered text X not including the insertion section B, the information generator 66 generates distribution information Q that indicates presentation of the registered text X or the modified text Z corresponding to the registered text X without executing searching for any insertion phrase Y (the second process S₅₂).
(5) In the first to third embodiments, after outputting the guidance voice G, the sound of distribution information Q is outputted from the sound outputting device 18, but the sound of distribution information Q may be outputted from the sound outputting device 18 in parallel to outputting a text translated from the guidance voice G to another language (that is, the distribution information Q may be sent to the terminal device 30). For example, an input text L identified by the voice analyzer 62 or a registered text X identified by the text identifier 64 (and further an insertion phrase Y) may be translated into another language by a known machine translation technique, and then the speech voice generated by speech synthesis for the translated text may be mixed with the sound component of the distribution information Q, and be outputted from the sound outputting device 18. For example, an audio signal S_{G} representing the guidance voice G may be temporarily stored in the voice guidance system 10 (for example, in the distribution terminal 12). Then, after generation of the distribution information Q by the management apparatus 20, the sound component of the distribution information Q may be mixed with the held audio signal S_{G} so as to temporally overlap the speech period of the guidance voice G. In other words, output of the guidance sound of the voice G is suspended until completion of generation of the distribution information Q. With this configuration, it is possible to output the sound of distribution information Q in parallel with the guidance voice G.
(6) There is possibility that multiple insertion phrases Y may be spoken in a period of the guidance voice G corresponding to the insertion section B of a registered text X. For example, if the guide person U_{B} speaks, "We have made a stop because of vehicle inspection and signal failure. We apologize for the delay. Please wait for resumption." as a guidance voice G corresponding to the registered text X₁ in Fig. 3, the voice acquirer 52 may specify multiple insertion phrases Y. In this situation, the information generator 66 may generate distribution information Q that indicates a text obtained by inserting multiple insertion phrases Y into one insertion section B of the registered text X identified at the first process S₅₁.
   However, an order of priority may be defined in advance for multiple insertion phrases Y that can be inserted into the insertion section B of each registered text X, and one insertion phrase Y according to the order of priority (for example, the insertion phrase Y with the highest order of priority) may be selected from among multiple insertion phrases Y identified at the second process S₅₂. The information generator 66 may generate distribution information Q that indicates a text in which the insertion phrase Y selected according to the order of priority is inserted into the registered text Y as related information R. In addition, if multiple insertion phrases Y are identified at the second process S₅₂ (if one insertion phrase Y cannot be identified), insertion of any insertion phrase Y to the registered text X may be omitted (it is possible not to insert any of the multiple insertion phrases Y into the registered text X).
   It is also possible to use information (hereinafter referred to as "status information") that indicates the current situation of a guidance target, such as the transportation facility, for identifying the insertion phrase Y. For example, the text identifier 64 may acquire position information that indicates the position of the vehicle 200, and may specify an insertion phrase Y corresponding to the input text L from among only candidates of names of places located around the position indicated by the position information among multiple insertion phrases Y. It is also possible for the text identifier 64 to specify one of multiple insertion phrases Y by referring to the operation schedule (diagram) of the train, bus, etc.
(7) In the first to third embodiments, the storage device 36 of the terminal device 30 stores the guidance table T_{B} including related information pieces R, but the location in which the guidance table T_{B} is stored is not limited to the above example. For example, the guidance table T_{B} may be stored in a distribution server apparatus that communicates with the terminal device 30 via a communication network. The terminal device 30 may transmit an information request specifying the identification information included in the distribution information Q to the distribution server apparatus, and the distribution server apparatus may transmit related information R corresponding to the identification information (identification information D_{R}) identified in the information request to the terminal device 30 having transmitted the request. The presentation device 38 of the terminal device 30 presents related information R received from the distribution server apparatus to the user U_{A}. As will be understood from the above description, it is not indispensable for the terminal device 30 to store related information R. It is also possible to distribute the guidance table T_{B} to the terminal device 30 in advance from an external apparatus, such as a distribution server apparatus or an information management system 100 (for example, the voice guidance system 10).
(8) In the first to third embodiments, the distribution information Q is transmitted to the terminal device 30 by means of sound communication using sound as a transmission medium, but the communication scheme for transmitting the distribution information Q to the terminal device 30 is not limited to the above example. For example, it is also possible to transmit the distribution information Q from the voice guidance system 10 to the terminal device 30 by means of wireless communication using electromagnetic waves, such as radio waves or infrared rays, as a transmission medium. As will be understood from the above example, near field wireless communication without using the communication network 300 is preferable for transmission of the distribution information Q. Sound communication using sound as a transmission medium or wireless communication using electromagnetic waves as a transmission medium are examples of near field wireless communication. However, the transmission scheme for the distribution information Q is not limited to near field wireless communication. For example, the distribution information Q may be transmitted from the management apparatus 30 via the communication network 300 to terminal devices 30 pre-registered as information service destinations (that is, push distribution may be used).
(9) In the first to third embodiments, the information generator 66 generates the distribution information Q including identification information of texts (the identification information D_{X} for a registered text X, the identification information D_{Y} for an insertion phrase Y, and/or the identification information D_{Z} for a modified text Z). However, the information generator 66 may generate distribution information Q including the text(s) themselves (the registered text X, the insertion phrase Y, and/or the modified text Z). For example, the first embodiment may be modified such that if an insertion phrase Y is identified at the second process S₅₂ (the decision at S₆₁ is affirmative), distribution information Q including a text including the insertion phrase Y inserted in the insertion section B of the registered text X is generated (S₆₂). If an insertion phrase Y is not identified at the second process S₅₂ (the decision at S₆₁ is negative), distribution information Q including the modified text Z is generated (S₆₃). The second embodiment may be modified such that if an insertion phrase Y is not identified at the second process S₅₂, distribution information Q including a text in which an insertion section B has been removed from the registered texts X is generated (S₆₃). The third embodiment may be modified such that distribution information Q including the modified text Z is generated (S_{A2}). If the distribution information Q includes a text as in the above example, there is no need to store the guidance table T_{B} in the terminal device 30. It is also possible to generate distribution information Q representative of a sound itself in a configuration in which related information R is presented in spoken form (as speech) to the user U_{A}.
(10) In each of the above embodiments, the input text L is generated by speech recognition of the guidance voice G, but the method for generation of the input text L is not limited to the above example. For example, the guide person U_{B} may input an input text L corresponding to a guidance voice G with the use of an operation input device, such as a keyboard. A registered text X similar to the input text L inputted by the guide person U_{B} is identified from among multiple registered texts X. According to this example, for example, even if there is a typing mistake in the input text L (that is, even if the input text L is different from any of the registered texts X), it is possible to present appropriate related information R intended by the guide person U_{B} for provision to the user U_{A}. As will be understood from the above example, "inputting" for the input text L includes, for example, inputting by means of an operation input device, such as a keyboard, in addition to voice inputting with the use of the sound receiving device 14. Therefore, for identification of the input text L, speech recognition of the guidance voice G is not essential.
(11) In each of the above embodiments, the information management system 100 is used for providing information in transportation facilities or commercial facilities, but the scenarios in which the information management system 100 is used are not limited to the above examples. It is also possible to use the information management system 100 in various entertainment facilities, such as theaters where theatrical works are performed. For example, it is possible to send distribution information Q for presenting related information of the guidance voices G spoken as quotes or lines in the theatrical work to the user apparatuses 30 from the information management system 100 to the terminal device 30.
(12) The information management system 100 according to each of the above modes is realized by cooperation of the control device 22 and a program, as shown in the above embodiments. For example, the program according to the first embodiment or the third embodiment is a program for generating distribution information Q for indicating the related information R to the terminal device 30 that presents related information R related to the guidance voice G to the user U_{A}. This program causes a computer to serve as a text identifier 64 that identifies a registered text X that is similar to the input text L identified by speech recognition of the guidance voice G from among multiple different registered texts X, and an information generator 66 that generates distribution information Q that indicates to the terminal device 30 as related information R a modified text Z partially different from the registered text X identified by the text identifier 64. The program according to the fourth embodiment causes a computer to serve as a text identifier 64 that identifies a registered text X that is similar to the input text L, and an information generator 66 that generates related information R corresponding to a modified text Z partially different from the registered text X identified by the text identifier 64. The program shown above may be provided in a form stored in a computer-readable recording medium and installed in the computer. The recording medium is, for example, a non-transitory recording medium, preferably, an optical recording medium (an optical disc), such as a CD-ROM, but may include any type of known recording medium, such as a semiconductor recording medium and a magnetic recording medium. It is also possible to provide the program to the computer in form of distribution via communication network.
(13) From the above-shown embodiments and modifications, preferred modes of the present invention are grasped as follows.

### Mode 1

An information management system according to a preferred mode (Mode 1) of the present invention is an information management system for generating distribution information for indicating to a terminal device related information related to a guidance voice for presentation of the related information to a user by the terminal device: a text identifier configured to identify from among multiple different registered texts a registered text that is similar to an input text representative of the guidance voice; and an information generator configured to generate distribution information that indicates to the terminal device the related information corresponding to a modified text that is partially different from the registered text identified by the text identifier. In Mode 1, a registered text similar to the input text representative of the guidance voice is identified from among the multiple registered texts. Therefore, as compared with, for example, a configuration in which an input text identified by speech recognition analysis for the guidance voice or an input character entered by a guide person is presented as related information to the user of the terminal device, more suitable related information can be presented to the user. In addition, distribution information that indicates, to the terminal device, related information corresponding to the modified text that is partially different from the registered text identified by the text identifier is generated. Accordingly, an advantage is obtained in that related information that is partially different from the registered text is presented to the user of the terminal device while the registered texts intended for use as guidance voices are used for comparison with the input text. For example, it is possible to present, to the user, related information obtained by removing items not suitable for presenting from the terminal device to the user (for example, personal information) from the guidance voice or appropriate related information obtained by modifying a part that cannot readily be processed with speech recognition. The first embodiment and the third embodiment described above correspond to examples of Mode 1.

### Mode 2

In a preferred example (Mode 2) of Mode 1, each of the registered texts includes an insertion section in which a selected one of multiple insertion phrases is inserted, with the text identifier being configured to execute a first process of identifying a registered text from among the multiple registered texts that is similar to the input text, and a second process of searching among the multiple insertion phrases for an insertion phrase corresponding to the input text for the registered text, and the information generator being configured to, in a case where an insertion phrase corresponding to the input text is identified at the second process, generate distribution information that indicates the related information corresponding to a text obtained by inserting the insertion phrase identified at the second process into the insertion section of the registered text identified at the first process, whereas to generate distribution information that indicates the related information corresponding to a modified text that is partially different from the registered text identified at the first process where an insertion phrase corresponding to the input text is not identified at the second process. In Mode 2, if an insertion phrase corresponding to the input text is identified at the second process, distribution information that indicates related information corresponding to a text obtained by inserting the insertion phrase into the insertion section of the registered text is generated, whereas if an insertion phrase corresponding to the input text is not identified at the second process, distribution information that indicates related information corresponding to a modified text that is partially different from the registered text is generated. Accordingly, even if the guide person makes a mispronunciation (for example, if the guide person speaks a phrase other than predicted insertion phrases) or a recognition error occurs for the guidance voice, it is possible to reduce a possibility of presenting to the user related information containing an inappropriate phrase. The first embodiment described above corresponds to an example of Mode 2.

### Mode 3

In a preferred example (Mode 3) of Mode 1, the information generator is configured to generate distribution information that indicates the related information corresponding to the modified text obtained by deleting part of the registered text identified by the text identifier. In Mode 3, distribution information is generated that indicates related information corresponding to the modified text obtained by deleting part of the registered text. Accordingly, for example, it is possible to present to the user related information obtained by deleting from the guidance voice information not suitable for presentation from the terminal device to the user (for example, personal information). The third embodiment corresponds to an example of Mode 3.

### Mode 4

An information management system according to a preferred mode (Mode 4) of the present invention is an information management system information management system for generating distribution information for indicating to a terminal device related information related to a guidance voice for presentation of the related information to a user by the terminal device, and includes: a text identifier configured to identify from among multiple different registered texts a registered text that is similar to an input text representative of the guidance voice; and an information generator configured to generate the distribution information that indicates to the terminal device the registered text identified by the text identifier, each of the registered texts including an insertion section for insertion of a selected one of multiple insertion phrases, with the text identifier being configured to execute a first process of identifying a registered text that is similar to the input text from among the multiple registered texts, and a second process of searching among the multiple insertion phrases for an insertion phrase corresponding to the input text, and the information generator being configured to, in a case where an insertion phrase corresponding to the input text is identified at the second process, generate distribution information that indicates the related information corresponding to a text obtained by inserting the insertion phrase identified at the second process into the insertion section of the registered text identified at the first process, whereas to generate distribution information that indicates the related information corresponding to a text corresponding to the registered text from which the insertion section has been removed in a case where an insertion phrase corresponding to the input text is not identified at the second process. In Mode 4, a registered text similar to the input text representative of the guidance voice is identified from among the multiple registered texts. Therefore, as compared with, for example, a configuration in which an input text identified by speech recognition analysis for the guidance voice or an input character entered by a guide person is presented as related information to the user of the terminal device, more suitable related information can be presented to the user. In addition, if an insertion phrase corresponding to the input text is identified at the second process, distribution information that indicates related information corresponding to a text obtained by inserting the insertion phrase into the insertion section of the registered text is generated, whereas if an insertion phrase corresponding to the input text is not identified at the second process, distribution information that indicates related information corresponding to a text corresponding to the registered text from which the insertion section has been removed is generated. Accordingly, even if the guide person makes mispronunciation (for example, if the guide person speaks a phrase other than predicted insertion phrases) or a recognition error is made for the guidance voice, it is possible to reduce likelihood of presenting to the user related information containing an incorrect phrase. The second embodiment corresponds to an example of

### Mode 4.

### Mode 5

In a preferred example (Mode 5) of any one of Modes 1 to 4, the information management system further includes a sound outputter configured to output the guidance voice and to output a sound including the distribution information to transmit the distribution information to the terminal device. In Mode 5, the sound outputter that outputs a guidance voice is also used for sound output of the distribution information (that is, sound communication with the use of sound with aerial vibration acting as a transmission medium). Therefore, it is possible to simplify the configuration of the information management system compared with a configuration in which the distribution information is transmitted to the terminal device by means of a device that is different from the sound outputter used for sound output of the guidance voice.

### Mode 6

An information management system according to a preferred mode (Mode 6) of the present invention is an information management system for generating related information related to a guidance voice, and includes: a text identifier configured to identify from among multiple different registered texts a registered text that is similar to an input text representative of the guidance voice; and an information generator configured to generate the related information corresponding to a modified text that is partially different from the registered text identified by the text identifier. In Mode 6, there is identified from among the multiple registered texts a registered text similar to the input text representative of the guidance voice. Therefore, as compared with, for example, a configuration in which an input text identified by speech recognition of the guidance voice or an input character entered by a guide person is presented as related information to the user of the terminal device, more suitable related information can be presented to the user. In addition, related information (for example, a translation text of the modified text) corresponding to the modified text that is partially different from the registered text identified by the text identifier is generated. Accordingly, there is an advantage that related information that is partially different from the registered text is presented to the user, while the registered texts supposed to be used as guidance voices are used for comparison with the input text. The third embodiment corresponds to an example of Mode 6.

### Mode 7

In a preferred example (Mode 7) of any of Modes 1 to 6, the text identifier is configured to identify a registered text that is similar to the input text identified by speech recognition of the guidance voice from among the multiple registered texts. In Mode 7, since the input text is identified by speech recognition of the guidance voice, there is an advantage that the guide person does not need to manually input the input text.

### Mode 8

An information management method according to a preferred mode (Mode 8) of the present invention is an information management method for generating distribution information for indicating to a terminal device related information related to a guidance voice for presentation of the related information to a user by the terminal device, and includes: identifying from among multiple different registered texts a registered text that is similar to an input text representative of the guidance voice; and generating distribution information that indicates to the terminal device the related information corresponding to a modified text that is partially different from the identified registered text. According to Mode 8, there is achieved the same effect as in the information management system according to Mode 1.

### Mode 9

An information management method according to a preferred mode (Mode 9) of the present invention is an information management method for generating distribution information for indicating to a terminal device related information related to a guidance voice for presentation of the related information to a user by the terminal device, and includes: identifying from among multiple different registered texts a registered text that is similar to an input text representative of the guidance voice; and generating distribution information that indicates to the terminal device the identified registered text, each of the registered texts including an insertion section in which a selected one of multiple insertion phrases is inserted, and the identifying of a registered text includes executing a first process of identifying from among the multiple registered texts a registered text that is similar to the input text, and a second process of searching among the multiple insertion phrases for an insertion phrase corresponding to the input text. The generating of the distribution information includes, in a case where an insertion phrase corresponding to the input text is identified at the second process, generating distribution information that indicates the related information corresponding to a text obtained by inserting the insertion phrase identified at the second process into the insertion section of the registered text identified at the first process, whereas
generating distribution information that indicates the related information corresponding to a text corresponding to the registered text from which the insertion section has been removed in a case where an insertion phrase corresponding to the input text is not identified at the second process. According to Mode 9, the same effects as in the information management system according to Mode 4 is achieved.

### Mode 10

An information management method according to a preferred mode (Mode 10) of the present invention is an information management method for generating related information related to a guidance voice, and includes: identifying from among multiple different registered texts a registered text that is similar to an input text representative of the guidance voice; and generating the related information corresponding to a modified text that is partially different from the identified registered text. According to the Mode 10, the same effects as in the information management system according to Mode 6 are achieved.

### LIST OF REFERENCE SYMBOLS

100: Information Management System
200: Vehicle
300: Communication Network
10: Voice Guidance System
12: Distribution Terminal
122: Control Device
124: Communication Device
14: Sound Receiving Device
16: Audio Device
18: Sound Outputting device
20: Management Apparatus
22: Control Device
24: Storage Device
26: Communication Device
30: Terminal Device
32: Sound Receiving Device
34: Control Device
36: Storage Device
38: Presentation Device
52: Voice Acquirer
54: Signal Processor
62: Voice Analyzer
64: Text Identifier
66: Information Generator
72: Information Extractor
74: Presentation Controller

## Claims

1. An information management system for generating distribution information for indicating to a terminal device related information related to a guidance voice for presentation of the related information to a user by the terminal device, the information management system comprising:
a text identifier configured to identify from among multiple different registered texts a registered text that is similar to an input text representative of the guidance voice; and
an information generator configured to generate distribution information that indicates to the terminal device the related information corresponding to a modified text that is partially different from the registered text identified by the text identifier.

2. The information management system according to claim 1,
wherein each of the registered texts includes an insertion section in which a selected one of multiple insertion phrases is inserted,
wherein the text identifier is configured to execute a first process of identifying from among the multiple registered texts a registered text that is similar to the input text, and a second process of searching among the multiple insertion phrases for an insertion phrase corresponding to the input text for the registered text, and
wherein the information generator is configured to, in a case where an insertion phrase corresponding to the input text is identified at the second process, generate distribution information that indicates the related information corresponding to a text obtained by inserting an insertion phrase identified at the second process into the insertion section of the registered text identified at the first process, whereas
to generate distribution information that indicates the related information corresponding to a modified text that is partially different from the registered text identified at the first process in a case where an insertion phrase corresponding to the input text is not identified at the second process.

3. The information management system according to claim 1, wherein the information generator is configured to generate distribution information that indicates the related information corresponding to the modified text obtained by deleting part of the registered text identified by the text identifier.

4. An information management system for generating distribution information for indicating to a terminal device related information related to a guidance voice for presentation of the related information to a user by the terminal device, the system comprising:
a text identifier configured to identify from among multiple different registered texts a registered text that is similar to an input text representative of the guidance voice; and
an information generator configured to generate distribution information that indicates to the terminal device the registered text identified by the text identifier,
wherein each of the registered texts includes an insertion section for insertion of a selected one of multiple insertion phrases,
wherein the text identifier is configured to execute a first process of identifying from among the multiple registered texts a registered text that is similar to the input text, and a second process of searching among the multiple insertion phrases for an insertion phrase corresponding to the input text, and
wherein the information generator is configured to generate distribution information that indicates the related information corresponding to a text obtained by inserting an insertion phrase identified at the second process into the insertion section of the registered text identified at the first process in a case where an insertion phrase corresponding to the input text is identified at the second process, whereas
to generate distribution information that indicates the related information corresponding to a text corresponding to the registered text from which the insertion section has been removed in a case where an insertion phrase corresponding to the input text is not identified at the second process.

5. The information management system according to any one of claims 1 to 4, further comprising
a sound outputter configured to output the guidance voice and to output a sound including the distribution information to transmit the distribution information to the terminal device.

6. An information management system for generating related information related to a guidance voice, comprising:
a text identifier configured to identify from among multiple different registered texts a registered text that is similar to an input text representative of the guidance voice; and
an information generator configured to generate the related information corresponding to a modified text that is partially different from the registered text identified by the text identifier.

7. The information management system according to any one of claims 1 to 6, wherein the text identifier is configured to identify from among the multiple registered texts a registered text that is similar to the input text identified by speech recognition of the guidance voice.

8. An information management method for generating distribution information for indicating to a terminal device related information related to a guidance voice for presentation of the related information to a user by the terminal device, the method comprising:
identifying from among multiple different registered texts a registered text that is similar to an input text representative of the guidance voice; and
generating distribution information that indicates to the terminal device the related information corresponding to a modified text that is partially different from the identified registered text.

9. An information management method for generating distribution information for indicating to a terminal device related information related to a guidance voice for presentation of the related information to a user by the terminal device, the method comprising:
identifying from among multiple different registered texts a registered text that is similar to an input text representative of the guidance voice; and
generating distribution information that indicates to the terminal device the identified registered text,
wherein each of the registered texts includes an insertion section in which a selected one of multiple insertion phrases is inserted,
wherein, in the identifying of a registered text, executing a first process of identifying from among the multiple registered texts a registered text that is similar to the input text, and a second process of searching among the multiple insertion phrases for an insertion phrase corresponding to the input text, and
wherein, in the generating of the distribution information, in a case where an insertion phrase corresponding to the input text is identified at the second process, generating distribution information that indicates the related information corresponding to a text obtained by inserting the insertion phrase identified at the second process into the insertion section of the registered text identified at the first process, whereas
generating distribution information that indicates the related information corresponding to a text corresponding to the registered text from which the insertion section has been in a case where an insertion phrase corresponding to the input text is not identified at the second process.

10. An information management method for generating related information related to a guidance voice, comprising:
identifying from among multiple different registered texts a registered text that is similar to an input text representative of the guidance voice; and
generating the related information corresponding to a modified text that is partially different from the identified registered text.
